Europäisches Patentamt

(19) European Patent Office

Office européen des brevets

(11) Numéro de publication : **0 288 389 B1**

## (12) FASCICULE DE BREVET EUROPEEN

(45) Date de publication du fascicule du brevet :
**10.07.91 Bulletin 91/28**

(51) Int. Cl.$^5$ : **B60C 23/20, B60C 23/04**

(21) Numéro de dépôt : **88400978.8**

(22) Date de dépôt : **21.04.88**

(54) **Dispositif de contrôle et d'alarme pour pneumatiques de véhicule.**

(30) Priorité : **23.04.87 FR 8705773**

(43) Date de publication de la demande :
**26.10.88 Bulletin 88/43**

(45) Mention de la délivrance du brevet :
**10.07.91 Bulletin 91/28**

(84) Etats contractants désignés :
**DE ES GB IT SE**

(56) Documents cités :
**DE-A- 3 445 854**
**FR-A- 1 399 657**
**FR-A- 1 582 878**
**FR-A- 2 160 911**
**FR-A- 2 444 308**
**FR-A- 2 564 041**
**FR-A- 2 578 202**
**US-A- 3 491 335**

(73) Titulaire : **JAEGER**
**2, rue Baudin**
**F-92303 Levallois-Perret (FR)**

(72) Inventeur : **Chantome, Isabelle**
**18, rue de Lisbonne**
**F-75008 Paris (FR)**
Inventeur : **Regnault, Serge**
**22, rue Milton**
**F-75009 Paris (FR)**

(74) Mandataire : **Martin, Jean-Jacques et al**
**Cabinet REGIMBEAU 26, Avenue Kléber**
**F-75116 Paris (FR)**

**Description**

La présente invention concerne le domaine des dispositifs d'alarme pour pneumatiques de véhicule.

On a déjà proposé de nombreux dispositifs permettant de surveiller la pression interne des pneumatiques de véhicule et de générer une alarme lorsque cette pression tombe sous un seuil prédéterminé.

Des moyens répondant à cette fonction sont par exemple décrits et représentés dans les demandes de brevet FR-A-2 564 041 et FR-A-2 578 202 déposées par la Demanderesse. Le US-A-3491335 décrit selon le préambule de la revendication 1 un dispositif qui génère une alarme lorsque la température du pneumatique dépasse un seuil déterminé.

La Demanderesse a maintenant posé le problème de générer une alarme, non seulement lorsque la pression interne d'un pneumatique tombe sous un seuil prédéterminé, mais également lorsque la température du pneumatique dépasse un seuil déterminé.

On sait en effet que dans de nombreux accidents le fait que le pneumatique éclate est du à une élévation anormale de température du pneumatique, par exemple soit en raison d'un sous gonflage des pneumatiques, soit en raison d'une surcharge du véhicule.

On a certes déjà proposé de communiquer au conducteur une information analogique représentative de la température du pneumatique. Il a ainsi été proposé de mesurer cette température à l'aide de ponts de jauges ou de thermo-couples. Les dispositions jusqu'ici proposées s'avèrent toutefois beaucoup trop coûteuses et pas assez fiables pour être retenues dans la pratique.

La conséquence directe est que de nos jours peu de véhicules sont équipés de moyens aptes à détecter une élévation anormale de la température des pneumatiques.

La prise en compte de ce paramètre pourrait cependant permettre d'améliorer nettement la sécurité.

La présente invention vient maintenant améliorer la situation en proposant un dispositif de contrôle et d'alarme pour pneumatiques de véhicule automobile comprenant un interrupteur thermosensible soumis à la température du pneumatique pour changer d'état lorsque la température du pneumatique dépasse un seuil, en vue d'une alerte, l'interrupteur thermosensible étant de plus, selon l'invention, adapté pour être sensible à une force centrifuge liée à la rotation de la roue qui porte le pneumatique, de telle sorte que la température de commutation de l'interrupteur thermosensible décroisse lorsque la vitesse du véhicule s'accroît.

La structure ainsi proposée dans le cadre de la présente invention exploite la constatation selon laquelle, en régime établi, pour une charge donnée du véhicule la température du pneumatique croît exponentiellement avec la vitesse, la température du pneumatique augmentant par ailleurs, à vitesse égale, en fonction de la charge du véhicule. En d'autres termes, l'augmentation de température lors d'un début d'emballement thermique est d'autant plus importante que la vitesse du véhicule est élevée. La structure proposée selon l'invention permet de donner l'alerte pour une température d'autant plus basse que la vitesse est grande et donc permet au conducteur de disposer du même temps pour réagir quelle que soit la vitesse et incite le conducteur à ralentir, jusqu'à ce qu'il atteigne une zone de vitesse compatible avec sa charge et la pression de gonflage de ses pneumatiques.

Selon une caractéristique avantageuse de la présente invention, l'interrupteur thermosensible est formé d'un contacteur thermique mécanique du type bilame ou rondelle cloquante.

Selon une autre caractéristique importante de l'invention l'interrupteur thermosensible comprend un contacteur thermique incliné sur une direction radiale par rapport à l'axe de la roue qui porte le pneumatique.

De préférence, selon la présente invention, l'interrupteur thermosensible est associé à un pressostat comprenant un boîtier qui loge une membrane déformable soumise à la pression interne du pneumatique et des moyens formant interrupteur électrique principal dont l'état est modifié lorsque la déformation de la membrane dépasse un seuil correspondant au seuil prédéterminé de pression à détecter.

Dans ce cas, une alarme est fournie au conducteur dans le cas où soit la pression du pneumatique tombe en dessous du seuil requis, soit la température devient supérieure à la température d'alerte.

L'interrupteur thermosensible et l'interrupteur électrique principal intégré au pressostat peuvent être connectés soit en série soit en parallèle.

Selon une autre caractéristique avantageuse de l'invention le dispositif de contrôle et d'alarme comprend en outre des moyens de couplage sans fil comportant un circuit à bobine dont l'état dépend de l'état des moyens interrupteurs et porté par la jante de la roue, d'une part, et d'autre part un circuit associé supporté par le châssis du véhicule et formant circuit oscillant.

D'autres caractéristiques, buts et avantages de la présente invention apparaîtront à la lecture de la description détaillée qui va suivre, et en regard des dessins annexés, donnés à titre d'exemple non limitatif et sur lesquels :

– la figure 1 représente une vue schématique extérieure d'un dispositif de contrôle et d'alarme conforme à la présente invention, à l'état de repos, c'est-à-dire pour une température inférieure à la température seuil d'alarme,

– la figure 2 représente une vue schématique de dessus du dispositif, comme illustré schématiquement par la flèche référencée II sur la figure 1,
– la figure 3 représente une vue similaire du même dispositif en cas de détection d'une température supérieure à la température seuil d'alarme,
– la figure 4 représente une vue schématique en coupe axiale du même dispositif, selon un plan de coupe référencé IV-IV sur la figure 2, à l'état de repos, c'est-à-dire pour une pression interne du pneumatique supérieure à la pression seuil d'alarme, et
– la figure 5 représente une vue schématique en coupe axiale du même dispositif en cas de détection d'une pression inférieure à la pression seuil prédéterminée.

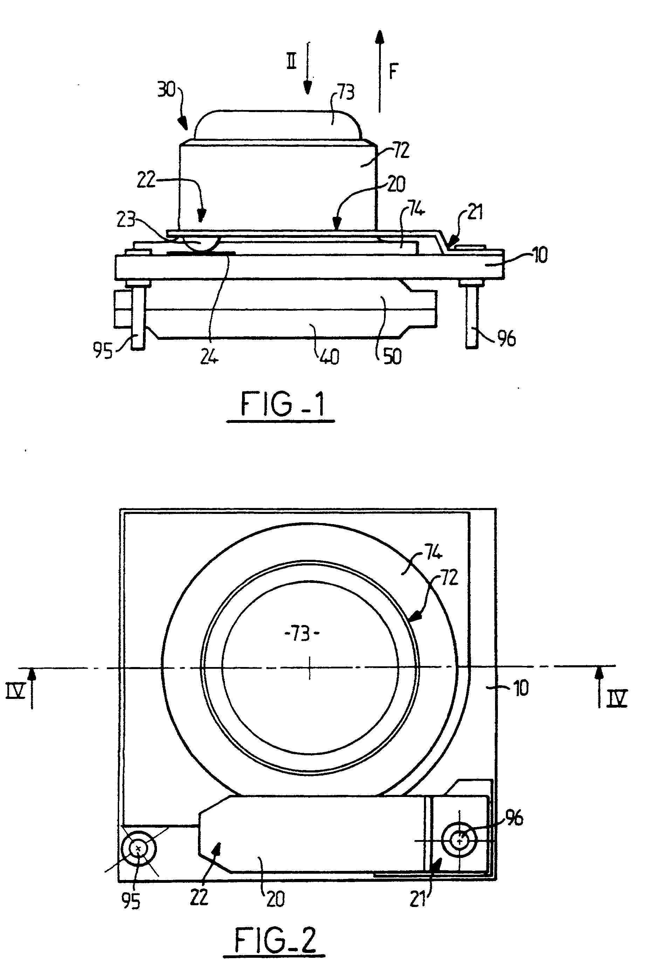

## STRUCTURE DE L'ELEMENT THERMOSENSIBLE ILLUSTRE SUR LES FIGURES 1 A 3.

On aperçoit sur les figures 1 à 3 annexées une plaque 10 en un matériau électriquement isolant, par exemple en alumine, qui porte un interrupteur thermosensible 20. Selon la représentation donnée sur les figures 1 à 3 annexées, l'interrupteur thermosensible 20 est formé d'un bilame. Une première extrémité 21 du bilame est fixée, par exemple par soudure sur le support 10. La seconde extrémité 22 du bilame porte un grain de contact 23 adapté pour coopérer avec une piste 24 électriquement conductrice portée par le support 10.

Le dispositif étant placé à l'intérieur du pneumatique, l'interrupteur thermosensible 20 est soumis à la température du pneumatique pour commuter lorsque la température du pneumatique dépasse un seuil, en vue d'une alerte.

Par ailleurs, le bilame thermosensible 20 est incliné sur une direction radiale par rapport à l'axe de la roue qui porte le pneumatique de telle sorte que la force centrifuge exercée sur le bilame thermosensible 20 sollicite ce dernier vers l'état d'alerte. Ainsi, la force centrifuge exerce sur l'interrupteur thermosensible une sollicitation qui tend à anticiper la commutation, de telle sorte que la température de commutation de l'interrupteur thermosensible décroisse lorsque la vitesse du véhicule s'accroît. Ainsi, le dispositif conforme à la présente invention permet d'avertir le conducteur du risque d'apparition d'un emballement thermique, la température du pneumatique, à charge constante, étant comme indiqué précédemment une fonction exponentielle de la vitesse du véhicule.

A titre d'exemple non limitatif l'élément thermosensible 20 peut être adapté pour déclencher une alarme pour 86° à 120 km/h, pour 82° à 160 km/h et pour 80° à 180 km/h.

On a illustré schématiquement sur la figure 1 par la flèche référencée F, la direction d'application de la force centrifuge qui coïncide avec une direction radiale par rapport à l'axe de la roue qui porte le pneumatique.

Selon l'illustration donnée schématiquement sur les figures annexées, la force F est normale à la plaque support 10 et au bilame 20. Ce dernier étant au repos sensiblement parallèle à la plaque 10.

Dans ces conditions, la sensibilité de l'élément thermosensible à la force centrifuge est maximale.

Bien entendu, l'invention n'est pas limité au mode de réalisation représenté sur les figures annexées. L'inclinaison du bilame thermosensible 20 par rapport à la direction d'application de la force centrifuge F peut être plus faible, l'influence de la force centrifuge sur l'évolution de la température de commutation étant réduite en conséquence.

Selon l'illustration donnée sur les figures annexées le bilame thermosensible 20 est sollicité à l'ouverture par la force centrifuge F.

Dans ce cas, le bilame 20 est adapté pour définir un interrupteur fermé au repos, c'est-à-dire que le grain de contact 23 repose contre la piste 24 lorsque la température est inférieure à la température seuil d'alerte, comme illustré sur la figure 1.

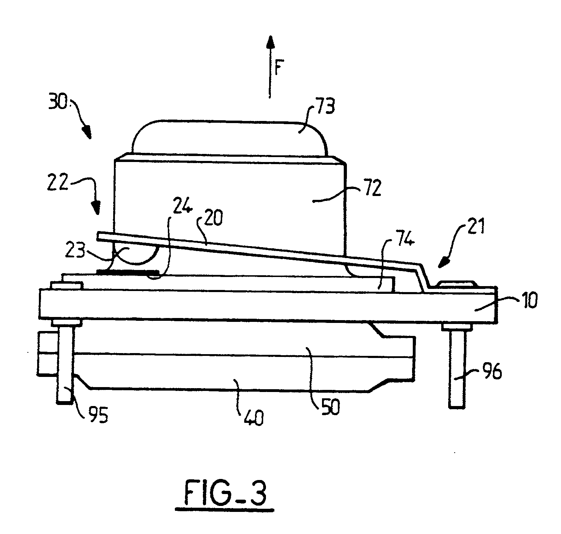

Par contre, lorsque la température du pneumatique devient supérieure à la température seuil d'alerte, liée à la force centrifuge et donc à la vitesse du véhicule, le bilame thermosensible se sépare de la piste 24, comme illustré sur la figure 3 pour définir un interrupteur ouvert.

Comme indiqué précédemment, le dispositif de contrôle et d'alarme qui vient d'être décrit se complète par des moyens de couplage sans fil permettant de transmettre une information liée à l'état de l'interrupteur thermosensible entre la roue du véhicule entraîné en rotation et le châssis du véhicule.

Les moyens de couplage sans fil comprennent de préférence un circuit à bobine dont l'état dépend de l'état de l'interrupteur thermosensible, le circuit étant porté par la jante de la roue en regard d'un circuit associé supporté par le châssis du véhicule et formant circuit oscillant.

De nombreux moyens de couplage sans fil de ce type ont déjà été décrits, par exemple dans la demande de brevet FR-A-2 564 041, ou encore dans les documents FR-A-2 444 308, FR-A-1 399 657, FR-A-1 582 878.

De ce fait, les moyens de couplage sans fil ne seront pas décrits plus en détail par la suite.

## UTILISATION EN COMBINAISON D'UN INTERRUPTEUR THERMOSENSIBLE ET D'UN PRESSOSTAT.

Par ailleurs, de préférence, le dispositif de contrôle et d'alarme conforme à la présente invention, comprenant un élément thermosensible soumis à la force centrifuge, est de plus associé à un pressostat 30 sensible à la pression interne du pneumatique pour déclencher une alarme, par l'intermédiaire des moyens de couplage sans fil, soit dans le cas où la température du pneumatique devient supérieure à la température seuil d'alerte, soit dans le cas où la pression interne du pneumatique devient inférieure à une pression seuil.

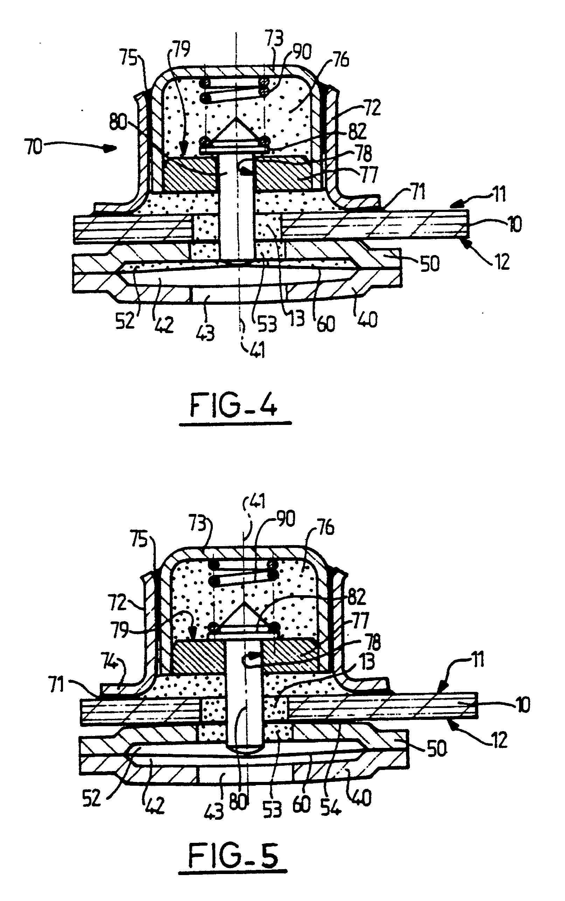

Le pressostat illustré sur les figures 4 et 5 annexées comprend pour l'essentiel deux coupelles 40, 50, une membrane 60, un boîtier 70, un plot 80 et un ressort de surcourse 90.

Le dispositif présente une symétrie générale par rapport à un axe référencé 41 normal à la plaque support 10.

La membrane 60 est réalisée en un matériau déformable électriquement conducteur. Elle est disposée entre les deux coupelles 40, 50. Les coupelles 40, 50 comportent chacune un lamage tourné vers la membrane 60 et définissent des chambres respectives 42, 52.

Les coupelles 40, 50 sont serrées l'une contre l'autre avec interposition de la membrane 60 et soudées entre elles, en périphérie de façon étanche.

Les coupelles 40, 50 sont pourvues chacune d'un orifice traversant central 43, 53 centré sur l'axe 41.

L'orifice 43 assure une communication entre la chambre 42 définie dans la coupelle 40 et le volume interne du pneumatique.

La coupelle 50 est fixée, par exemple, par soudure, en 54, sur la surface 12 du support isolant 10, le bilame thermosensible 20 étant fixé sur la surface 11 opposée.

La plaque support 10 est pourvue d'un alésage traversant 13 centré sur l'axe 41 et aligné avec l'orifice 53. Le boîtier 70 est fixé, de préférence soudé en 71, sur la surface 11 du support 10.

Le boîtier 70 peut faire l'objet de différents modes de réalisation. Selon l'illustration annexée il comprend un fourreau 72 et une cloche 73 centrée sur l'axe 41. Le fourreau 72 est pourvu d'une collerette 74 transversale à l'axe 41 et dirigée vers l'extérieur du fourreau, par l'intermédiaire de laquelle le boîtier 70 est soudé sur la surface 11 du support 10.

Par ailleurs, la cloche 73 est fixée, par exemple par soudure, en 75, sur le fourreau 72.

Le boîtier 70 composé du fourreau 72 et de la cloche 73 délimite une chambre interne 76. La chambre 76 communique par l'intermédiaire des orifices 13 et 53 avec la chambre 52.

L'espace défini par la chambre 76, les orifices 13, 53 et la chambre 52 est rendu étanche vis-à-vis de l'extérieur par les soudures 75, 71 et 54.

La cloche 73 porte un disque 77 muni d'un alésage central 78 centré sur l'axe 41 et qui reçoit le plot 80. Le plot 80 est en un matériau électriquement conducteur.

Celui-ci est formé pour l'essentiel d'une tige cylindrique centrée sur l'axe 41. Le plot 80 est pourvu sur son extrémité éloignée de la membrane 60 et contenue dans la chambre 76 d'une nervure annulaire 82.

Un ressort hélicoïdal 90 est intercalé entre le fond de la cloche 73 et la nervure 82. Ainsi le ressort 90 tend à repousser la nervure 82 contre la surface 79 du disque 77 opposée à la membrane 60.

La pression du milieu contenu dans la chambre 52 est contrôlée lors de l'assemblage de telle sorte que lorsque la pression interne du pneumatique appliquée à la chambre 42 est supérieure à un seuil d'alarme prédéterminé, la membrane 60 soit sollicitée en appui contre le plot 80. Le ressort 90 fléchit en cas de surpression à l'intérieur du pneumatique pour éviter toute déformation de la membrane 60, comme illustré sur la figure 4.

Par contre, lorsque la pression à l'intérieur du pneumatique tombe en dessous d'un seuil prédéterminé, la membrane 60 se sépare du plot 80, comme illustré sur la figure 5. En d'autres termes, la membrane 60 et le plot 80 intégré au pressostat 30 constitue un interrupteur électrique fermé dans des conditions normales d'utilisation (pression interne du pneumatique supérieure à la pression seuil) et ouvert en cas d'alerte (pression interne du pneumatique inférieure à la pression seuil).

## PREMIER MODE DE CONNECTION ENTRE L'INTERRUPTEUR THERMOSENSIBLE ET LE PRESSOSTAT.

Un tel interrupteur sensible à la pression interne du pneumatique peut être connecté en série de l'interrupteur thermosensible précité dans la mesure où selon le mode de réalisation précédemment évoqué ce dernier constitue également un interrupteur fermé dans des conditions normales d'utilisation (température inférieure à la température seuil d'alarme) et ouvert en cas d'alerte (température du pneumatique supérieure à la température d'alarme).

L'interrupteur intégré au pressostat 30 et l'interrupteur thermosensible 20 peuvent être connectés en série entre deux bornes de sortie 95, 96 portées par la plaque support 10.

Pour cela une première borne 95 peut être connectée à l'ensemble comprenant les deux coupelles 40, 50 et la membrane 60, tandis que le boîtier 70 du pressostat est relié à la piste 24 coopérant avec le grain de contact 23 et que l'extrémité 21 du bilame 20 est fixée à la seconde borne de sortie 96.

En résumé lorsque l'interrupteur intégré au pressostat et l'interrupteur thermosensible sont connectés en série et constituent des interrupteurs fermés dans les conditions normales d'utilisation, le fonctionnement du dispositif est le suivant.

En fonctionnement normal, c'est-à-dire lorsque la pression interne du pneumatique est supérieure au seuil d'alarme et la température du pneumatique inférieure au seuil d'alarme, le bilame 20 repose par l'intermédiaire du grain de contact 23 contre la piste 24 et la membrane 60 repose contre le plot 80. Une liaison électrique continue est ainsi définie entre les bornes 95 et 96 par l'intermédiaire de la membrane 60, du plot 80 et du bilame 20. Cette position correspond à l'illustration donnée sur les figures 1 et 4.

Lorsque la pression interne du pneumatique tombe en dessous du seuil d'alarme prédéterminé, la membrane 60 se sépare du plot 80, comme illustré sur la figure 5, et coupe la liaison électrique entre les bornes 95 et 96.

De même, lorsque la température du pneumatique devient supérieure à une température d'alarme en fonction de la vitesse du véhicule, le grain de contact 23 porté par le bilame 20 se sépare de la piste 24 et interrompt la liaison électrique entre les bornes 95 et 96.

## VARIANTE DE CONNECTION ENTRE L'INTERRUPTEUR THERMOSENSIBLE ET LE PRESSOSTAT.

En variante, on peut cependant envisager d'utiliser un interrupteur thermosensible soumis à la force centrifuge et un interrupteur intégré au pressostat 30, qui constituent respectivement des interrupteurs ouverts dans des conditions normales d'utilisation, et connectés alors en parallèle, de telle sorte qu'une alarme soit déclenchée lorsque l'un des deux interrupteurs se ferme, c'est-à-dire soit lorsque la pression interne du pneumatique tombe en dessous du seuil d'alarme, ou que la température du pneumatique devient supérieure à la température d'alarme.

L'interrupteur thermosensible 20 doit bien entendu être placé pour être sollicité par la force centrifuge vers sa position de fermeture, et non plus vers sa position d'ouverture.

Le cas échéant, l'élément thermosensible 20 peut par exemple être placé sur la surface opposée 12 du support 10.

De même, dans le cas de la variante précitée, le fonctionnement du pressostat 30 doit être inversé par rapport à celui illustré sur les figures 4 et 5.

En d'autres termes, la chambre 42 délimitée par la coupelle 40 doit alors être fermée de façon étanche. Par contre, la chambre 52 délimitée par la coupelle 50 doit communiquer avec le volume interne du pneumatique. La pression du milieu contenue dans la chambre étanche 42 doit de plus être contrôlée lors de l'assemblage de telle sorte que lorsque la pression interne du pneumatique appliquée à la chambre 52 est normalement supérieure à un seuil d'alarme prédéterminé, la membrane 60 soit éloignée du plot 80, mais que par contre lorsque la pression à l'intérieur du pneumatique et appliquée à la chambre 52 tombe en dessous du seuil, la membrane 60 se déplace contre le plot 80.

Dans le cadre de cette variante, l'interrupteur thermosensible 20 et l'interrupteur intégré au pressostat 30 sont connectés en parallèle entre les bornes 95 et 96.

La borne 95 peut être reliée électriquement au boîtier 70. Par contre la seconde borne 96 est alors reliée à l'extrémité 21 du bilame 20 et à l'ensemble comprenant les deux coupelles 40, 50 et la membrane 60 ; bien sûr la piste 24 reste reliée électriquement au boîtier 70. Le fonctionnement général de cette variante est le suivant.

En fonctionnement normal, c'est-à-dire lorsque la pression interne du pneumatique est supérieure au seuil d'alarme et la température du pneumatique inférieure au seuil d'alarme, la liaison électrique entre les bornes 80, 82 est interrompue. En effet, le grain 23 porté par le bilame thermosensible 20 est séparé de la piste 24. Par ailleurs la membrane 60 est séparée du plot 80.

Lorsque la pression interne du pneumatique tombe en dessous du seuil d'alarme prédéterminé, la membrane 60 vient reposer contre le plot 80 et assure la liaison électrique entre les bornes 95 et 96.

De même, lorsque la température du pneumatique devient supérieure à la température d'alarme, le grain de contact 23 porté par le bilame 20 vient reposer contre la piste 24 et assure la liaison électrique entre les bornes 95 et 96.

Là encore, une information liée à l'état de l'interrupteur thermosensible 20 et de l'interrupteur intégré au pressostat 30 est transmise par les moyens de couplage sans fil précités.

## AUTRES VARIANTES

Bien entendu la présente n'est pas limitée aux modes de réalisation qui viennent d'être décrits mais s'étend à toutes variantes conformes à son esprit.

En particulier, l'interrupteur thermosensible 20 pourra prendre d'autres formes de réalisation qu'un bilame. Il pourra être formé par exemple à base d'une rondelle cloquante.

Selon encore un autre mode de réalisation, l'interrupteur thermosensible pourra être composé de deux éléments ; un élément sensible à la température et peu sensible à la force centrifuge, plutôt rigide, et un élément peu sensible à la température et sensible à la force centrifuge, plutôt souple. Cette solution présente l'intérêt de faciliter les réglages en raison de la séparation des fonctions température et vitesse : on peut ainsi régler séparément le déplacement de l'élément sensible à la température, et celui de la lame souple en fonction de la vitesse. Cependant, cette solution ne peut être retenue que dans le cas où l'élément thermosensible est formé d'un bilame non cloquant puisque les éléments thermosensibles cloquants imposeraient une température de commutation indépendante de la position d'une lame souple éventuellement associée.

On notera encore que, selon une autre variante de réalisation, l'interrupteur thermosensible et l'interrupteur intégré au pressostat peuvent être associés à des circuits de couplage sans fil séparés, travaillant à des fréquences différentes, pour permettre d'indiquer au conducteur si l'alarme visualisée est liée à un défaut de pression ou à un défaut de température.

## Revendications

1. Dispositif de contrôle et d'alarme pour pneumatiques de véhicule automobile, comprenant un interrupteur thermosensible (20) soumis à la température du pneumatique, pour changer d'état lorsque la température du pneumatique dépasse un seuil, en vue d'une alerte, caractérisé par le fait que l'interrupteur thermosensible (20) est de plus adapté pour être sensible à une force centrifuge liée à la rotation de la roue qui porte le pneumatique, de telle sorte que la température de commutation de l'interrupteur thermosensible (20) décroisse lorsque la vitesse du véhicule s'accroît.

2. Dispositif de contrôle et d'alarme selon la revendication 1, caractérisé par le fait que l'interrupteur thermosensible (20) est formé d'un contacteur thermique mécanique, du type bilame ou rondelle cloquante.

3. Dispositif de contrôle et d'alarme selon l'une des revendications 1 ou 2, caractérisé par le fait que l'interrupteur thermosensible comprend, d'une part, un élément sensible à la température et peu sensible à la force centrifuge, d'autre part, un élément peu sensible à la température et sensible à la force centrifuge.

4. Dispositif de contrôle et d'alarme selon l'une des revendications 1 à 3, caractérisé par le fait que l'interrupteur thermosensible (20) comprend un contacteur thermique incliné sur une direction (F) radiale par rapport à l'axe de la roue qui porte le pneumatique.

5. Dispositif de contrôle et d'alarme selon l'une des revendications 1 à 4, caractérisé par le fait qu'il comprend en outre un pressostat (30) comprenant un boîtier (70) qui loge une membrane (60) déformable et soumise à la pression interne du pneumatique, et des moyens (60, 80) formant interrupteur électrique principal, dont l'état est modifié lorsque la déformation de la membrane (60) dépasse un seuil, correspondant au seuil prédéterminé de pression à détecter.

6. Dispositif de contrôle et d'alarme selon la revendication 5, caractérisé par le fait que l'interrupteur thermosensible (20) et l'interrupteur électrique principal intégré au pressostat (30) sont connectés en série.

7. Dispositif de contrôle et d'alarme selon la revendication 6, caractérisé par le fait que les moyens formant interrupteur électrique principal (60, 80) intégrés au pressostat (30) sont fermés lorsque la pression interne du pneumatique est supérieure à la pression seuil d'alarme, tandis que l'interrupteur thermosensible (20) est fermé lorsque la température du pneumatique est inférieure à la température seuil d'alarme.

8. Dispositif de contrôle et d'alarme selon la revendication 5, caractérisé par le fait que l'interrupteur thermosensible (20) et l'interrupteur électrique principal (60, 80) intégré au pressostat sont connectés en parallèle.

9. Dispositif de contrôle et d'alarme selon la revendication 8, caractérisé par le fait que les moyens formant interrupteur électrique principal (60, 80) intégrés au pressostat sont ouverts lorsque la pression interne du pneumatique est supérieure à la pression seuil d'alarme, tandis que l'interrupteur thermosensible (20) est ouvert lorsque la température du pneumatique est inférieure à la température seuil d'alarme.

10. Dispositif de contrôle et d'alarme selon l'une des revendications 1 à 9, caractérisé par le fait qu'il comprend en outre des moyens de couplage sans fil comportant un circuit à bobine dont l'état dépend de l'état des moyens interrupteurs et portés par la jante de la roue, d'une part, et d'autre part un circuit associé supporté par le châssis du véhicule et formant circuit oscillant.

## Patentansprüche

1. Überwachungs- und Alarmvorrichtung für die Reifen von Automobilfahrzeugen mit einem wärmeempfindlichen Schalter (20), welcher der Temperatur des Reifens unterworfen ist, um seinen Zustand im Hinblick auf einen Alarm zu verändern, wenn die Temperatur des Reifens eine Schwelle überschreitet, dadurch gekennzeichnet, daß der wärmeempfindliche Schalter (20) außerdem befähigt ist, auf eine mit der Rotation des den Reifen tragenden Rades verknüpfte Zentrifugalkraft anzusprechen derart, daß sich die Umschalttemperatur des wärmeempfindlichen Schalters (20) erniedrigt, wenn die Geschwindigkeit des Fahrzeuges ansteigt.

2. Überwachungs- und Alarmvorrichtung nach Anspruch 1, dadurch gekennzeichnet, daß der wärmeempfindliche Schalter (20) von einem mechanischen thermischen Kontaktgeber des Bimetallamellentyps oder des Schnappscheibentyps gebildet ist.

3. Überwachungs- und Alarmvorrichtung nach einem der Ansprüche 1 oder 2, dadurch gekennzeichnet, daß der wärmeempfindliche Schalter einerseits ein Element umfaßt, welches auf die Temperatur anspricht und gegenüber der Zentrifugalkraft wenig empfindlich ist, und andererseits ein Element, welches gegenüber der Temperatur nur wenig empfindlich ist und auf die Zentrifugalkraft anspricht.

4. Überwachungs- und Alarmvorrichtung nach einem der Ansprüche 1 bis 3, dadurch gekennzeichnet, daß der wärmeempfindliche Schalter (20) einen thermischen Kontaktgeber umfaßt, der zu einer Richtung (F) geneigt ist, welche mit Bezug auf die Achse des den Reifen tragenden Rades radial verläuft.

5. Überwachungs- und Alarmvorrichtung nach einem der Ansprüche 1 bis 4, dadurch gekennzeichnet, daß sie außerdem einen Druckschalter (30) mit einem Gehäuse (70) umfaßt, welches eine deformierbare und dem Innendruck des Reifens unterworfene Membran (60) beherbergt, sowie Mittel (60, 80), die einen elektrischen Hauptschalter bilden, dessen Zustand sich ändert, wenn die Deformation der Membran (60) eine Schwelle überschreitet, wobei diese Schwelle der vorbestimmten, festzustellenden Druckschwelle entspricht.

6. Überwachungs- und Alarmvorrichtung nach Anspruch 5, dadurch gekennzeichnet, daß der wärmeempfindliche Schalter (20) und der im Druckschalter (30) integrierte elektrische Hauptschalter in Reihe miteinander verbunden sind.

7. Überwachungs- und Alarmvorrichtung nach Anspruch 6, dadurch gekennzeichnet, daß die den elektrischen Hauptschalter (60, 80) bildenden und im Druckschalter (30) integrierten Mittel geschlossen sind, wenn der Innendruck des Reifens oberhalb der Alarmdruckschwelle liegt, während der wärmeempfindliche Schalter (20) geschlossen ist, wenn die Temperatur des Reifens unter der Alarmtemperaturschwelle liegt.

8. Überwachungs- und Alarmvorrichtung nach Anspruch 5, dadurch gekennzeichnet, daß der wärmeempfindliche Schalter (20) und der im Druckschalter integrierte elektrische Hauptschalter parallel geschaltet sind.

9. Überwachungs- und Alarmvorrichtung nach Anspruch 8, dadurch gekennzeichnet, daß die den elektrischen, im den Druckschalter integrierten Hauptschalter (60, 80) bildenden Mittel geöffnet sind, wenn der Innendruck des Reifens oberhalb der Alarmdruckschwelle liegt, während der wärmeempfindliche Schalter geöffnet ist, wenn die Temperatur des Reifens unterhalb der Alarmtemperaturschwelle liegt.

10. Überwachungs- und Alarmvorrichtung nach einem der Ansprüche 1 bis 9, dadurch gekennzeichnet, daß er außerdem einerseits Mittel zur drahtlosen Ankopplung umfaßt mit einem Spulenstromkreis, dessen Zustand von dem Zustand der Schaltmittel abhängt, wobei diese Ankopplungsmittel von der Felge des Rades getragen werden, und andererseits einen zugeordneten, vom Chassis des Fahrzeuges abgestützten Stromkreis, der einen Schwingkreis bildet.

## Claims

1. A control and alarm device for motor vehicle tyres, comprising a heat sensitive switch (20) which is subjected to the tyre temperature, to change its state and to give an alarm when the temperature of the tyre exceeds a threshold, characterized in that the heat sensitive switch (20) is also adapted to be sensitive to a centrifugal force connected with the rotation of the wheel supporting the tyre, so that the switching temperature of the heat sensitive switch (20) decreases when the speed of the vehicle increases.

2. A control and alarm device according to Claim 1, characterized in that the heat sensitive switch (20) is formed by a mechanical thermal contactor of the bimetallic or snapping washer type.

3. A control and alarm device according to Claim 1 or 2, characterized in that the heat sensitive switch comprises on the one hand an element sensitive to temperature and not very sensitive to centrifugal force, and on the other hand an element not very sensitive to temperature and sensitive to centrifugal force.

4. A control and alarm device according to any of Claims 1 to 3, characterized in that the heat sensitive switch (20) comprises a thermal contactor inclined in a direction (F) radially of the axis of the wheel which supports the tyre.

5. A control and alarm device according to any of Claims 1 to 4, characterized in that it also comprises a pressure sensitive switch (30) comprising a casing (70) which accommodates a deformable diaphragm (60) subjected to the internal pressure of the tyre, and means (60, 80) forming a main electric switch whose state is modified when the deformation of the diaphragm (60) exceeds a threshold corresponding to the predetermined pressure threshold to be detected.

6. A control and alarm device according to Claim 5, characterized in that the heat sensitive switch (20) and the main electric switch integral with the pressure sensitive switch (30) are connected in series.

7. A control and alarm device according to Claim 6, characterized in that the means forming the main electric switch (60, 80) which are integral with the pressure sensitive switch (30) are closed when the internal pressure of the tyre is higher than the threshold pressure of the alarm, while the heat sensitive switch (20) is closed when the temperature of the tyre is lower than the threshold temperature of the alarm.

8. A control and alarm device according to Claim 5, characterized in that the heat sensitive switch (20) and the main electric switch (60, 80) integral with the pressure sensitive switch are connected in parallel.

9. A control and alarm device according to Claim 8, characterized in that the means forming the main electric switch (60, 80) and integral with the pressure sensitive switch are opened when the internal pressure of the tyre is higher than the threshold pressure of the alarm, while the heat sensitive switch (20) is opened when the temperature of the tyre is lower than the threshold temperature of the alarm.

10. A control and alarm device according to any of Claims 1 to 9, characterized in that it also comprises wireless coupling means comprising a coil circuit whose state depends on the state of the switch means, mounted on the rim of the wheel and an associated circuit supported by the vehicle chassis and forming an oscillatory circuit.

FIG-1

FIG-2

FIG_3

FIG_4

FIG_5

11